# EUROPEAN PATENT SPECIFICATION

(11) **EP 2 323 881 B1**
(45) Date of publication and mention of the grant of the patent: **13.03.2019**
(21) Application number: 09807216.8
(22) Date of filing: 12.08.2009
(51) Int. Cl.: B60T 13/18

(54) **LINEAR DUAL CHANNEL HYDRAULIC CONTROL UNIT**
LINEARE DOPPELKANAL-HYDRAULIKSTEUEREINHEIT
UNITÉ DE COMMANDE HYDRAULIQUE À DEUX CANAUX LINÉAIRES

(30) Priority: 12.08.2008 US 188693 P
(43) Date of publication of application: 25.05.2011
(73) Proprietor: BWI Company Limited S.A., 1628 Luxembourg (LU)
(72) Inventor: REUTER, David, F., Beavercreek OH 45434 (US); BORGEMENKE, Daniel, N., Springboro OH 45066 (US); MANNING, Matthew, P., Dayton OH 45419 (US); BASSETT, Duane, E., Centerville OH 45458 (US)
(74) Representative: Fox-Male, Nicholas Vincent Humbert
(86) International application number: PCT/US2009/053546
(87) International publication number: WO 2010/019661

(56) References cited:
- EP-A2- 0 232 053
- US-A- 2 874 533
- US-A1- 2003 234 574
- US-A1- 2006 238 021
- US-A1- 2006 238 021
- US-A1- 2007 289 442
- US-A1- 2007 289 442
- US-B2- 7 021 904
- US-B2- 7 021 904

## Description

### TECHNICAL FIELD

The present disclosure relates to anti-lock braking systems; more particularly, to a linear dual channel hydraulic control unit for an anti-lock braking system.

### BACKGROUND

Anti-lock braking systems are used in motor vehicles to prevent vehicle wheels from locking against rotation when excessive braking force is applied to an individual wheel brake. Such systems control the brake fluid pressure applied to a wheel brake in a manner which maximizes the braking force yet allows the wheel to predominantly roll, rather than slide, across a road surface. A typical anti-lock braking system includes a number of wheel speed sensors, an electronic control unit ("ECU") which monitors the wheel speed sensors to detect and respond to wheel lockup, and a motorized hydraulic control unit ("HCU") which may be actuated by the ECU in response to pending wheel lockup to reduce and ultimately modulate the brake fluid pressure that is delivered to the affected wheel brake.

Anti-lock braking systems used in automobiles such as passenger cars and light trucks are conventionally designed as multiple channel units where the ECU and HCU are integrated to form an electro-hydraulic control unit ("EHCU"). The integration of the ECU and HCU permits constituent elements such as valve solenoids to be surface mounted on the ECU control circuit to reduce the complexity of assembly, while the provision of multiple channels permits the pumping elements servicing each hydraulic channel to be driven by a common, suitably specified motor. The predominant method of providing dual circuit hydraulic channels in an EHCU employs pairs of opposed piston pumps. The pistons in these pumps are typically driven by a single cam or eccentric mounted on a motor shaft. The opposed piston pumps and common HCU motor are oriented perpendicular to each other within the overall device; thereby, necessitating a substantial bulky and boxy packaging envelop. While the integrated EHCU designs can delivery the required braking performance for motorcycles and motor scooters, the overall packaging requirement of the EHCU do not efficiently adapt to the spatial constraints of motorcycles, scooters, and other vehicles that have a generally open and comparatively planar frame.

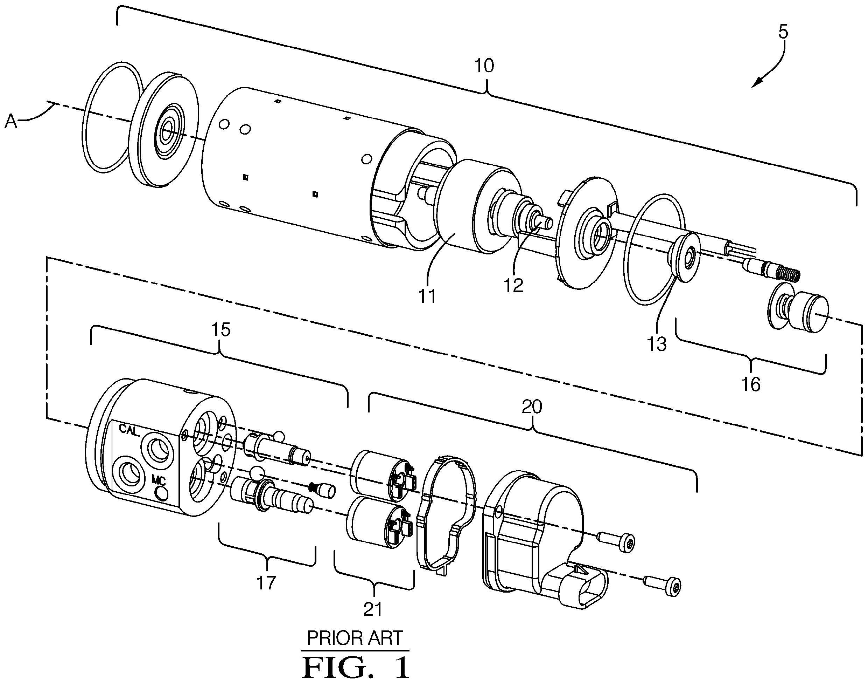

U.S Patent Application No. 11/940,965 discloses a linear single channel hydraulic control unit (SCHCU) that is designed for vehicles having generally open and comparatively planar frames. Shown in FIG. 1 is SCHCU 5 having a motor section 10, a hydraulic block 15, and a control section 20, all of which are disposed linearly in the described order so that the assembled unit has a substantially elongated cylindrical or "linear" configuration. The motor section 10 includes a motor 11 having a drive shaft 12 that drives a rotatable piston bearing surface 13 about the rotational axis of the drive shaft. The hydraulic block 15 houses a pumping assembly 16 and fluid control valves 17. The control section 20 includes solenoid coils 21 that receive portions of the fluid control valves 17. The pumping assembly 16 is reciprocally driven by the rotatable piston bearing surface 13 along an axis of reciprocation radially disposed from and otherwise parallel to the rotational axis of the motor shaft.

The elongated cylindrical configuration of the SCHCU disclosed in US patent Application No. '965 provides a preferable compact packaging geometry for the mounting of the SCHCU to vehicles having a generally open and comparatively planar frame. However, the disclosed SCHCU is a single channel control unit that can only respond to the wheel lockup of the individual wheel that it is associated with. A separate SCHCU is required in order to respond to the wheel lockup of a second wheel of the motor vehicle.

Accordingly there is a need for a dual channel hydraulic control unit that is compact; there is a further need for a dual channel hydraulic control unit that has a packaging geometry that is conducive to be mounted onto a vehicle having an open and substantially planar frame; and there is still a further need for a dual channel hydraulic control modular that is cost effective to manufacture.
United States Patent Application Publication No. US 20070289442 describes a brake pump assembly with a hydraulic block and a pumping element including a polymer piston that is received in a piston bore.
United States Patent Publication No. US 7021904 describes a hydraulic pump with swash plates which move reciprocally while opposing pistons, so as to expand and contract a volume chamber according to rotation of a cylinder block.

### SUMMARY

The present invention is defined by the appended claims.

In one aspect, a linear dual channel hydraulic control unit (DCHUC) for a motor vehicle having a first control section, a first hydraulic block, a motor section, a second hydraulic block, and a second control section. All of which are disposed linearly in the described order so that the assembled DCHUC has an elongated cylindrical or "linear" configuration. The motor section includes a single motor with an output shaft having a first output shaft end and an opposing second output shaft end. A wobble plate is fixed onto each of the output shaft ends, wherein each wobble plate includes a rotatable piston bearing surface. The first hydraulic block is mated onto one end of the motor section and the second hydraulic block is mated onto the other end of the motor section. Each hydraulic block includes an inlet for fluid communication with a braking fluid source, an outlet for fluid communication with a braking system wheel brake, a pump cavity housing a pumping assembly, and first and second valve cavities housing first and second fluid control valves, respectively. The pumping assembly is reciprocally driven by the rotatable piston bearing surface along an axis radially disposed from and otherwise parallel to the axis of rotation of the motor shaft. Mated to each hydraulic block is a control section having first and second solenoid coils to receive portions of the first and second fluid control valves.

In another aspect, each of the rotatable piston bearing surfaces includes an apex portion that can be rotationally offset relative to each other; thereby, allowing the output cycles of the pumping assemblies to be independently timed to reduce vibration or to minimize current draw.

### BRIEF DESCRIPTION OF THE DRAWINGS

FIG. 1 is an exploded perspective view of a prior art linear single channel hydraulic control unit.
FIG. 2 is an exploded perspective view of a linear dual channel hydraulic control unit (DCHCU).
FIGS. 3A is a perspective view of one end of the motor section shown in FIG. 2.
FIG. 3B is a perspective view of the opposite end of the motor section shown in FIG. 3A.
FIGS. 4A is a transparent perspective views of one of the hydraulic blocks shown in FIG. 2.
FIG. 4B is another perspective views of the hydraulic block shown in FIG. 4A.
FIG. 5 is a representative cut-away view of the linear DCHCU showing the apex portions of the wobble plates 0 degree out-of-phase.
FIG. 5A is a schematic view of FIG. 5 along section 5A-5A showing the relative positioning of the apex portions of the wobble plates and pump assemblies of the hydraulic blocks.
FIG. 6 is a representative cut-away view of the linear DCHCU showing the apex portions of the wobble plates 180 degrees out of phase.
FIG. 6A is a schematic view of FIG. 6 along section 6A-6A showing the relative positioning of the apex portions of the wobble plates and pump assemblies of the hydraulic blocks.

### DETAILED DESCRIPTION

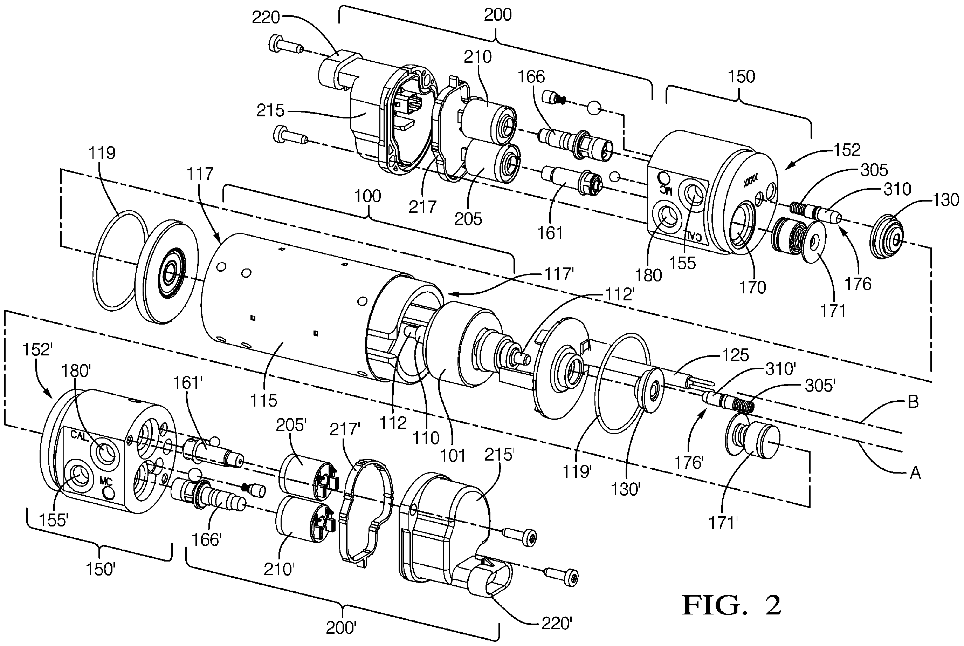

A generalized aspect of the disclosed linear dual channel hydraulic control unit (DCHCU) is shown in FIGS. 2 through 6A. Shown in the exploded view provided in FIG. 2 is a DCHCU that includes a first control section 200, a first hydraulic block 150, a motor section 100, a second hydraulic block 150', and a second control section 200'. All of which are disposed linearly in the described order so that the assembled DCHUC has an elongated cylindrical or "linear" configuration. These components may be secured together to produce a device having five serially interlocking body sections, or may be positioned and serially mounted within a single enveloping housing to provide for greater protection from environmental conditions. Each of the first and second hydraulic blocks 150, 150' include a modulator inlet 155, 155' for providing fluid communication with a braking fluid source such as a master cylinder, and a modulator outlet 180, 180' for providing fluid communication with a brake such as a wheel disc brake. The first and second hydraulic blocks 150, 150' are substantially identical to each other. Each of the first and second control sections 200, 200' includes multiple solenoid coils and a port 220, 220' or electrical terminal for providing communication with a remote ECU assembly. The first and second control sections 200, 200' are also substantially identical to each other.

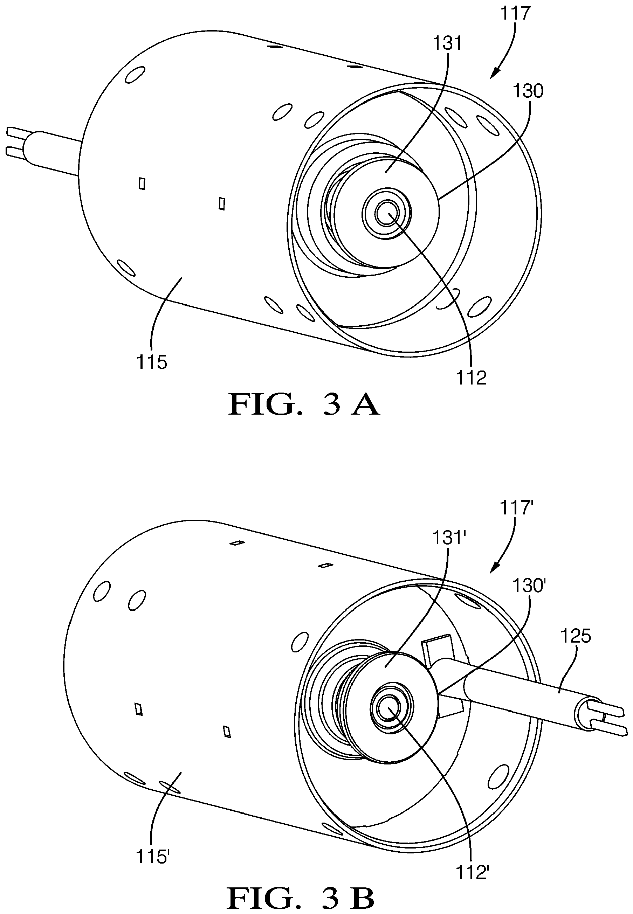

Shown in FIGS. 2, 3A, and 3B, the centrally located motor section 100 includes a motor 101 having an interpenetrating drive shaft 110 along an axis of rotation 'A.' The drive shaft 110 includes a first drive shaft end 112 and an opposing second drive shaft end 112'. The motor section 100 may further include a projecting power terminal 125 for connection through one of the hydraulic blocks 150, 150' to the corresponding control section 200, 200' of the unit. Alternately, the motor section 100 may be provided with power through a separate wiring harness (not shown), or an auxiliary portion of a wiring harness also connecting to one of the control sections 200, 200' of the unit.

The motor section 110 includes an external motor housing 115 having a substantially cylindrical cavity adapted for receiving the motor 101, or alternately may be the housing of a weatherproof motor, and a first hydraulic block facing end 117 and a second hydraulic block facing end 117'. The external packaging geometry of the motor housing 115 may also be substantially cylindrical as shown in FIGS. 2-3B. The first and second hydraulic block facing ends 117, 117' of the motor section 100 can be secured to their respective hydraulic blocks 150, 150' by various means in known in the art. The mating segments of the motor housing 115 and hydraulic blocks 150, 150' are preferably sealed to each other by a first and second resilient seal 119, 119' such as an elastomeric gasket or O-ring.

Shown in FIGS. 3A, 3B, 5, and 6, the motor section 100 further includes a first wobble plate 130 fixed to the motor first drive shaft end 112 and a second wobble plate 130' fixed to the motor second drive shaft end 112'. Each of the wobble plates 130, 130' provide a rotatable piston bearing surface 131, 131' disposed at an oblique angle with respect to the axis of rotation "A" of the motor drive shaft 110, so that each of the wobble plates 130, 130' translates rotation of the motor drive shaft 110 into reciprocation of the piston bearing surface 131, 131' along an axis of reciprocation 'B.' The axis of reciprocation 'B' is radially disposed from and otherwise substantially parallel to the axis of rotation 'A' of the motor shaft 110. The wobble plates 130, 130' may be rotationally offset with respect to each other; the details and benefits of which are discussed below.

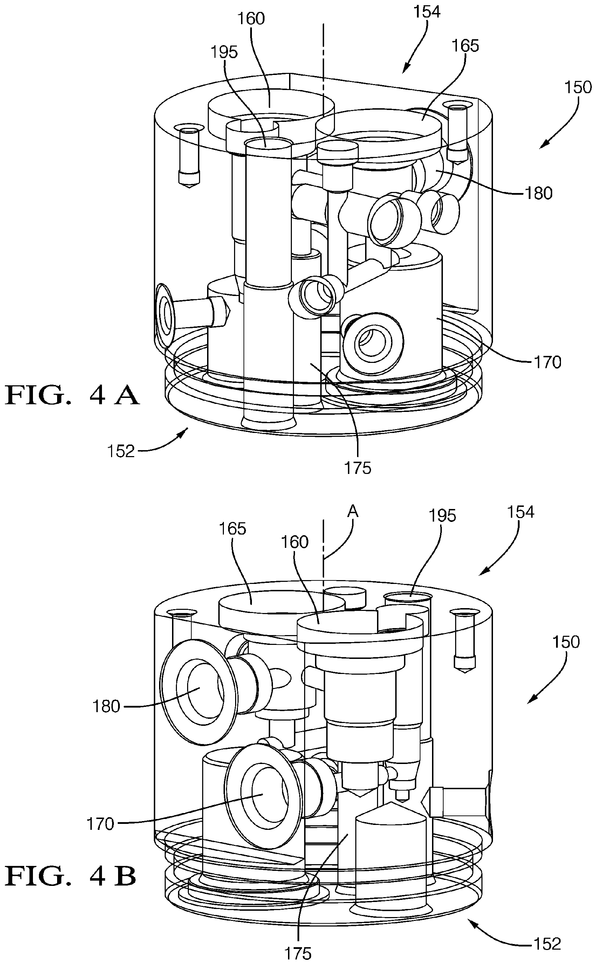

Shown in FIG. 4A is a transparent perspective view of the first hydraulic block 150, which is substantially identical to the second hydraulic block 150'. Shown in FIG. 4B is a transparent view of the first hydraulic block 150 rotated about the 'A' axis to more clearly show the features that are obscured in FIG. 4A. Hydraulic block 150 includes a motor-facing end 152 and a control section-facing end 154. The first hydraulic block 150 defines or generally contains many of the conventional elements of an automotive HCU in the prior art, including a modulator inlet 155, an apply valve cavity 160 housing an apply valve assembly 161, a release valve cavity 165 housing a release valve assembly 166, an accumulator cavity 170 housing an accumulator assembly 171, a pump cavity 175 housing a pumping assembly 176, and a modulator outlet 180. As in many designs, the fluid connection between the accumulator cavity 170 and the pump cavity 175 includes an inline pump inlet check valve assembly, while the fluid connection between the pump cavity 175 and the modulator inlet side of the HCU includes an inline pump outlet check valve assembly.

However in the "linear" configuration of the DCHCU, the pump cavity 175 and pumping assembly 176 are unconventionally longitudinally oriented and centered about longitudinal axis of reciprocation 'B' so that they are radially offset from but otherwise parallel to motor drive shaft 110, with the cavity opening disposed on the motor section-facing end 152 of the hydraulic block 150. The apply and release valve cavities 160 and 165, and correspondingly the apply and release valve assemblies 161 and 166, are also longitudinally oriented along axes that are parallel to the axis of rotation 'A' of the motor drive shaft 110 with the cavity openings disposed on the control section-facing end of the hydraulic block. The accumulator cavity 170, and correspondingly the accumulator assembly 171, is also longitudinally oriented along an axis that is parallel to the primary axis of rotation 'A' of the motor drive shaft 110 with the cavity opening disposed on the motor facing end 152 of the hydraulic block 150. Since the accumulator assembly 171 is essentially entirely contained within the accumulator cavity 170, the cavity 170 could also be oriented along an axis that is perpendicular to but potentially offset from the axis A', with the cavity opening disposed on the side of the hydraulic block 150. In addition, if the motor section 100 includes a projecting power terminal 125, a longitudinal aperture 195 may be formed through the hydraulic block 150 from the motor section facing end to the control section facing end to permit the internal delivery of motor power through power terminal 125. This combination of longitudinally oriented features, and in particular the longitudinal orientation of the pumping cavity, permits the lateral extents of the DCHCU to generally correspond to the lateral extents of the motor section 100, yielding a device having a substantially cylindrical profile.

With the disclosed configuration, the outer diameter of each of the hydraulic blocks 150, 150' may be less than 2.25 inches. This size diameter is optimal to be machined on a standard, highly efficient, rotary machining line, which allows significant cost savings over the conventional rectangular block design.

With further reference to FIG. 2, the components and configuration of the first control section 200 are substantially identical to those of the second control section 200'. Each of the control sections 200, 200' comprises an apply valve solenoid coil 205, 205' and a release valve solenoid coil 210, 210' received within a control housing 215, 215'. The solenoid coils 205, 205' and 210, 210' as well as the motor section's power terminal 125, if included, are electrically connected to an external port 220, 220' which receives an end of a wiring harness connected to a remote ECU (not shown). The solenoid coils are received within the control section housing 215, 215' and positioned such that the apply valve solenoid coil 205, 205' operatively engages projecting portions of the respective apply valve assembly 161, 162' and the release valve solenoid coil 210, 210' operatively engages projecting portions of the release valve assembly 166, 166'. The housing 215, 215' may be adapted to mate directly to the hydraulic block 150, 150' or may be configured to mate to the motor section housing 115 such that the hydraulic blocks 150, 150' is substantially enclosed between the respective housings 215, 215' while providing access, at a minimum, to the modulator inlets 155, 155' and modulator outlets 180, 180'. The control section housing 215, 215' preferably includes a resilient seal 217, 217' such as an elastomeric gasket or O-ring for sealing this portion of the device against the hydraulic block 150, 150'. The control sections 200, 200' may be molded from plastic.

To prevent wheel lockup during a braking event, the apply valve assembly 161, 161' is closed to isolate the wheel brake connected to the modulator outlet 180, 180' from the pressurized fluid being supplied to the modulator inlet 155, 155'. The release valve assembly 166, 166' is subsequently opened to reduce brake fluid pressure at the modulator outlet side of the DCHCU by allowing brake fluid to flow into the accumulator cavity, compressing the accumulator assembly 171, 171'. The pumping assembly 176, 176' draws fluid from the accumulator, through the pump inlet check valve assembly 185, 185' and forces the fluid through the pump outlet check valve assembly 190, 190' to the modulator inlet side of the HCU between the modulator inlet 155, 155' and the closed apply valve assembly 161, 161'. When lockup ceases, the release valve assembly 166, 166' is closed to isolate the accumulator, and the apply valve assembly 161, 161' is subsequently opened to allow pressurized fluid to be supplied to the brake. When the ECU senses only one of the two wheels is locking up, the release valve of the hydraulic block for the non-locking wheel remains closed, in which there is no brake fluid for the pump assembly to draw in and the pump assembly simply cycles dry.

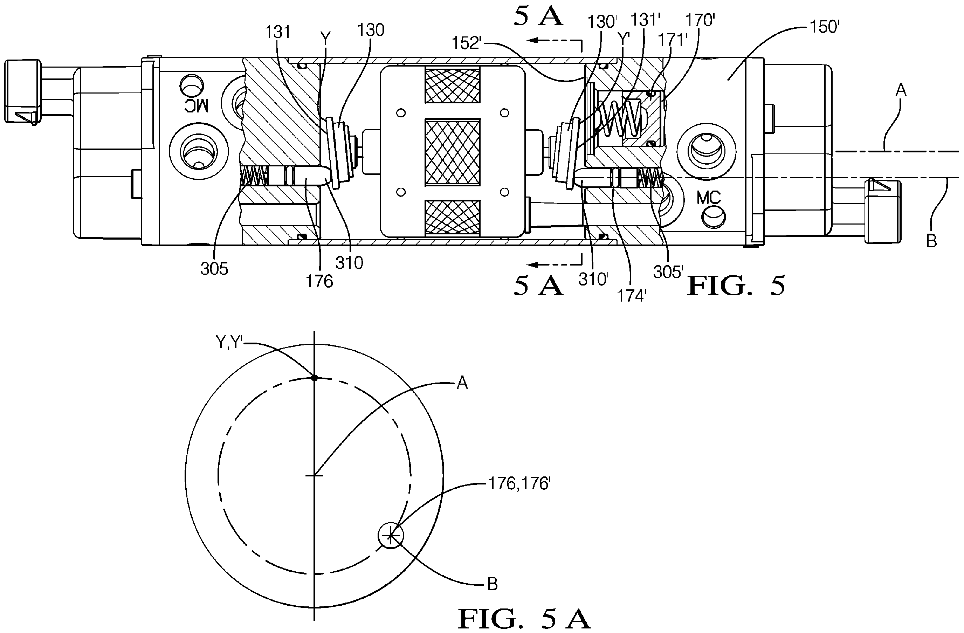

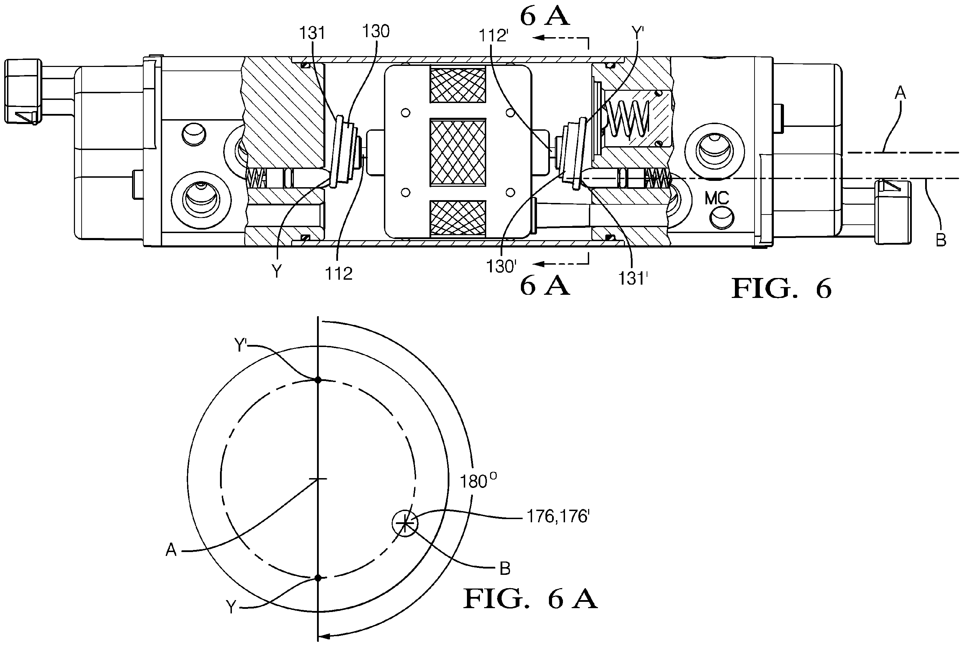

As shown in FIGS. 5 and 6 and previously described above, each of the wobble plates 130, 130' include a piston bearing surface 131, 131' disposed at an oblique angle with respect to axis of rotation 'A' of motor drive shaft 110 so that the wobble plates 130, 130' translates rotation of the motor drive shaft 110 into reciprocation of the piston bearing surface 131 of the plate 130 along axis of reciprocation 'B', which is radially disposed from and otherwise parallel to axis of rotation 'A' (as observed from an external and fixed point of reference). The piston bearing surface 131 is preferably disposed at a dihedral angle of about 2 to about 10 degrees with respect to a plane perpendicular to the axis of rotation "A." The wobble plates 130, 130' may be a generally disc-shaped, metal or plastic part defining an aperture 132 for mating engagement with the motor drive shaft 110. The piston bearing surfaces 131, 131' may be part of a substantially planar surface such as that shown in FIGS. 5 and 6 or an arcuate track generally formed into the part, an arcuate relief projecting generally above the part, or a combination of the foregoing. Furthermore, the piston bearing surfaces 131, 131' may contain an integral ball or roller bearing element (not shown) to further lower frictional forces between the piston and wobble plate assembly.

Various pumping assemblies 176,176' may be combined with the wobble plate 130, 130' to provide a pump which reciprocates along axis of reciprocation 'B' in response to rotation of the wobble plate 130, 130'. Shown in FIGS. 2, 5, and 6, each of the pumps includes the wobble plate 130, 130', pump cavity 175, 175' and pumping assembly 176, 176'. Each of the pumping assemblies 176, 176' comprises a return spring 305, 305' inserted within the pump cavity 175, 175' and biased to press an elongated piston 310, 310' against the angled pump bearing surface 131, 131' of the wobble plate 130, 130'. The pumping assemblies 176, 176' are coaxially located along axis of reciprocation 'B'. The wobble plates are pressed onto the motor shaft and the timing of the output cycle of the pumping assemblies 176, 176' may be independently adjusted by off-setting the rotational angle of one wobble plate 130, 130' with respect to the other. As the motor drive shaft 110 rotates the wobble plates 130, 130' about the axis of rotation 'A,' each angled bearing surfaces 131, 131' pushes against their respective elongated piston 310, 310' resulting in a substantially linear axial reciprocal movement of the pumping assemblies 176, 176' along the axis of reciprocation 'B.'

FIG. 5 is a representative cut-away view of the DCHCU showing the wobble plates 130, 130' oriented in which the pumping assemblies 176, 176' are simultaneously discharging by having their in pump stroke in phase. FIG. 6 is a representative cut-away view of the DCHCU showing the wobble plate oriented in which the pumping assemblies 176, 176' are alternatingly discharging by having their pump stroke out of phase. Each of the bearing surfaces 131, 131' of the respective wobble plates 130, 131 includes an apex portion Y, Y', respectively. The apex portion Y, Y' is defined as a point on the bearing surface 131, 131' that is the farthest distance spaced apart from its respective motor drive shaft end 112, 112'.

Shown in FIG. 5, the apex portions Y, Y' of the respective wobble plates 130, 130' are rotationally offset 0 degrees relative to each other. FIG. 5A is a schematic view of FIG. 5 along section 5A-5A showing the angle of offset of apex Y from Y' relative to the vertical axis which is 0 degree. In other words, the apex Y is aligned with the apex Y' along an axis radially spaced from and substantially parallel to the rotational axis 'A'. FIG. 5A also shows the relative positions of the pumping assemblies 176, 176' coaxially located along the axis of reciprocation 'B'. Shown in FIG. 6, the apex portions Y, Y' of respective wobble plates 130, 130' are rotationally offset 180 degrees relative to each other. FIG. 6A is a schematic end view of FIG. 6 along section 6A-6A showing apex Y 180 degrees offset from apex Y' and the pumping assemblies 171, 171' to be axially aligned.

The adjustable offset of the apex portions Y, Y', of the respective wobble plates with respect to each other, provides for the output cycles of the first pump assembly 176 to be timed independently from the second pump assembly 176'. When the apex portions Y, Y' are 0 degree offset, as shown in FIGS. 5 and 5A, the pistons 310, 310'of the pumping assemblies 176, 176' are pumping on the discharge stroke simultaneously, in which the mass of the each piston cancels each other out as well as the output pressure pulses canceling each other out resulting in minimized motor and pump vibrations. When the apex portions Y, Y' are 180 degrees offset, as shown in FIGS. 6 and 6A, the motor minimizes current draw since the motor is only activating one set of pistons 310, 310' at a time. Based on specific applications, there may be instances where minimizing current draw is more desirable than minimizing vibration and vice versa. The adjustable angular offset of apex portion Y relative to apex Y' allows the DCHCU to be tailored to meet the specification of the application.

There may be a need to have the ports of the hydraulic blocks to be oriented in directions other than that as shown in FIGS. 2-6 to meet specific packing requirements to accommodate fixed hydraulic lines. In such cases, the hydraulic blocks 150, 150' may be rotationally offset from each other to obtain the desired port orientations. By rotationally offsetting the hydraulic blocks 150, 150', the pumping assemblies 176, 176' are also rotationally offset. In which case, the apex portions Y, Y' of the wobble plates may be rotationally adjusted to compensate for the offset of the pumping assemblies 176, 176' to obtain the desired pumping effect to minimize pumping vibration or current draw, or to obtain a balance of acceptable smoothness and current draw. An alternative embodiment (not shown) for explanatory purposes, the hydraulic blocks 150, 150' are offset 180 degrees with respect to each other, and the apex portions Y, Y' are maintained at 0 degree offset. The 180 degrees offset of the hydraulic blocks 150, 150' will result in a 180 degrees off-set of the pumping assemblies 176, 176. The 180 degrees offset of the pumping assemblies 176, 176' relative to the 0 degree offset of the apex portions Y, Y' will provide the same effect as having the hydraulic blocks 0 degree offset and the apex portions Y, Y' 180 degrees offset, in which current draw is minimized.

The dual channel hydraulic control units disclosed herein provide significant advantages over other hydraulic control units known to have been used in motorcycles, motor scooters, and other similar vehicles having substantially opened and comparatively planar frames. The dual channel configuration permits ABS operation within a single package to control the lock-up of two separate wheels. The linear configuration of the DCHCU also permits the inline mounting of DHCUs between the master cylinder(s) and wheel brakes, which may permit a reduction in the length and routing complexity of vehicle brake lines and a corresponding reduction in the difficulty of bleeding air from the braking system. The potential reduction in the length of vehicle brakes lines also permits a reduction in in-circuit brake fluid volume, which can provide increased responsiveness and performance, i.e., a tighter and stiffer brake circuit.

The dual channel configuration further provides an element of redundancy in which a single common motor can control the braking of two separate wheels. To take advantage of the economies of scale, substantially identical components for the hydraulic blocks 150, 150' and control sections 200, 200' may be used for both end of the motor section 100; thereby minimizing tooling cost and reducing the cost of materials by purchasing in greater volume.

Another significant advantage is that the apex portions Y, Y' of the wobble plates may be rotationally offset relative to each other about the axis of rotation 'A' to reduce or eliminate the natural harmonic vibrations of the pumping assemblies 176, 176' while the DCHCU is in operation controlling wheel lockup. The rotational offset of the apex portions of the wobble plates allows the DCHCU to be tailored to acceptable vibration and current draw of the motor for specific applications.

Although preferred embodiments of the present invention have been disclosed, various changes and modifications may be made thereto by one skilled in the art without departing from the scope of the invention as set forth in the appended claims. It is also understood that the terms used herein are merely descriptive, rather than limiting, and that various changes may be made without departing from the scope of the invention.

## Claims

1. A multi-channel hydraulic control unit for a motor vehicle, the hydraulic control unit comprising:
a motor housing (115) defining a substantially cylindrical cavity, wherein said motor housing includes a first housing end (117) and a second housing end (117');
a motor (101) disposed within said motor housing, wherein said motor includes an output shaft (110) extending along an axis of rotation (A), wherein said output shaft includes a first output shaft end (112) and an opposing second output shaft end (112');
a first wobble plate (130) fixed onto said first output shaft end and a second wobble plate (130') fixed onto said second output shaft end, wherein said first and second wobble plates include a first (131) and second (131') piston bearing surface, respectively;
a first hydraulic block (150) mated to said first housing end and a second hydraulic block (150') mated to said second housing end, wherein each hydraulic block includes:
an inlet (155) for fluid communication with a braking fluid source and an outlet (180) for fluid communication with a braking system brake,
a pump cavity (175) housing a pumping assembly (176) and having an opening disposed on a first end, and
first (160) and second (165) valve cavities housing first (161) and second (166) fluid control valves, each of said valve cavities having an opening disposed on a second end opposite said first end; and
a first control section (200) mated to said first hydraulic block and a second control section (200') mated to said second hydraulic block, wherein each control section provides first (205) and second (210) solenoid coils receiving portions of said first and second fluid control valves, respectively, at a proximal end thereof.

2. The multi-channel hydraulic control unit of claim 1, wherein said first control section (200), said first hydraulic block (150), said motor housing (115), said second hydraulic block (150'), and second control section (200') are disposed serially along said axis of rotation (A) of said motor output shaft (110) in the described order in an elongated linear configuration.

3. The multi-channel hydraulic control unit of claim 1, wherein said pumping assembly (176) of said first hydraulic block (150) and said pumping assembly(176') of said second hydraulic block (150') are reciprocally driven by said respective rotatable piston bearing surfaces (131, 131') along respective axes of reciprocation (B) radially disposed from and otherwise parallel to said axis of rotation (A) of said motor output shaft (110); thereby modulating fluid pressure at said outlet (180) during a braking event.

4. The multi-channel hydraulic control unit of claim 3, wherein said axis of reciprocation (B) of pumping assembly of said first hydraulic block (150) and said axis of reciprocation of said pumping assembly of said second hydraulic block (150') are coaxially aligned.

5. The multi-channel hydraulic control unit of claim 4, wherein at least one of said piston bearing surface (131) of said wobble plates (131) is disposed at an oblique angle with respect to said axis of rotation (A).

6. The multi-channel hydraulic control unit of claim 4, wherein each of said piston bearing surfaces (131, 131') includes an apex portion (Y, Y') adapted to operate said respective pumping assembly (176, 176'), wherein one of said apex portions is rotationally adjustable between 0 and 360 degrees about said axis of rotation (A) of said motor shaft relative to other of said apex portion; thereby allowing the output cycles of said pumping assemblies to be independently timed.

7. The multi-channel hydraulic control unit of claim 6, wherein said apex portions (Y, Y') of said piston bearing surfaces (131, 131') are 0 degree offset and axially aligned, whereby the pumping assemblies (176, 176') are discharging simultaneously, thereby minimizing vibration of the pumping assembly.

8. The multi-channel hydraulic control unit of claim 6, wherein said apex portions (Y, Y') of said piston bearing surfaces (131, 131') are 90 degrees offset, whereby the pumping assemblies (176, 176') are alternatingly discharging, thereby minimizing current draw of said motor.

9. The multi-channel hydraulic control unit of claim 3, wherein one of said axes of reciprocation (Y, Y') of pumping assemblies (176, 176') is offset from 0 to 360 degrees relative to the other.

10. The multi-channel hydraulic control unit of claim 1, wherein said hydraulic blocks (150, 150') are substantially identical.

11. The multi-channel hydraulic control unit of claim 10, wherein said control sections (200, 200') are substantially identical.

12. The multi-channel hydraulic control unit of claim 1, wherein said one of said hydraulic blocks (150, 150') includes an outer diameter of less than 57.15 mm (2.25 inches).

## Patentansprüche

1. Multikanal-Hydrauliksteuereinheit für ein Motorfahrzeug, wobei die Hydrauliksteuereinheit Folgendes aufweist:
ein Motorgehäuse (115), das einen im Wesentlichen zylindrischen Hohlraum definiert, wobei das Motorgehäuse ein erstes Gehäuseende (117) und ein zweites Gehäuseende (117') aufweist;
einen Motor (101), der innerhalb des Motorgehäuses angeordnet ist, wobei der Motor eine Abgabewelle (110) aufweist, die sich entlang einer Drehachse (A) erstreckt, wobei die Abgabewelle ein erstes Abgabewellenende (112) und ein entgegengesetztes zweites Abgabewellenende (112') aufweist;
eine erste Taumelscheibe (130), die an dem ersten Abgabewellenende befestigt ist, und eine zweite Taumelscheibe (130'), die an dem zweiten Abgabewellenende befestigt ist, wobei die erste und die zweite Taumelscheibe jeweils eine erste (131) und eine zweite (131') Kolbenlagerfläche aufweisen;
einen ersten Hydraulikblock (150), der mit dem ersten Gehäuseende verbunden ist, und einen zweiten Hydraulikblock (150'), der mit dem zweiten Gehäuseende verbunden ist, wobei jeder Hydraulikblock Folgendes aufweist:
einen Einlass (155) für eine Fluidverbindung mit einer Bremsfluidquelle und einen Auslass (180) für eine Fluidverbindung mit einer Bremssystembremse,
einen Pumpenhohlraum (175), der eine Pumpenbaugruppe (176) unterbringt und eine Öffnung hat, die an einem ersten Ende angeordnet ist, und
einen ersten (160) und einen zweiten (165) Ventilhohlraum, die ein erstes (161) und ein zweites (166) Fluidsteuerventil unterbringen, wobei die Ventilhohlräume jeweils eine Öffnung haben, die an einem zweiten Ende angeordnet ist, das dem ersten Ende entgegengesetzt ist; und
einen ersten Steuerbereich (200), der mit dem ersten Hydraulikblock verbunden ist, und einen zweiten Steuerbereich (200'), der mit dem zweiten Hydraulikblock verbunden ist, wobei jeder Steuerbereich einen ersten (205) und einen zweiten (210) Solenoidspulenaufnahmebereich des ersten bzw. des zweiten Fluidsteuerventils an seinem proximalen Ende bereitstellt.

2. Multikanal-Hydrauliksteuereinheit gemäß Anspruch 1, wobei der erste Steuerbereich (200), der erste Hydraulikblock (150), das Motorgehäuse (115), der zweite Hydraulikblock (150') und der zweite Steuerbereich (200') in Reihe entlang der Drehachse (A) der Motorabgabewelle (110) in der beschriebenen Reihenfolge in einer länglichen, linearen Konfiguration angeordnet sind.

3. Multikanal-Hydrauliksteuereinheit gemäß Anspruch 1, wobei die Pumpenbaugruppe (176) des ersten Hydraulikblocks (150) und die Pumpenbaugruppe (176') des zweiten Hydraulikblocks (150') durch die jeweiligen drehbaren Kolbenlagerflächen (131, 131') entlang jeweiligen Hin- und Herbewegungsachsen (B) hin- und herbewegend angetrieben werden, die radial und im Übrigen parallel zu der Drehachse (A) der Motorabgabewelle (110) versetzt sind; wodurch ein Fluiddruck an dem Auslass (180) während eines Bremsereignisses moduliert wird.

4. Multikanal-Hydrauliksteuereinheit gemäß Anspruch 3, wobei die Hin- und Herbewegungsachse (B) der Pumpenbaugruppe des ersten Hydraulikblocks (150) und die Hin- und Herbewegungsachse der Pumpenbaugruppe des zweiten Hydraulikblocks (150') koaxial ausgerichtet sind.

5. Multikanal-Hydrauliksteuereinheit gemäß Anspruch 4, wobei zumindest eine der Kolbenlagerflächen (131) der Taumelscheiben (131) in einem schrägen Winkel hinsichtlich der Drehachse (A) angeordnet ist.

6. Multikanal-Hydrauliksteuereinheit gemäß Anspruch 4, wobei die Kolbenlagerflächen (131, 131') jeweils einen Scheitelabschnitt (Y, Y') aufweisen, der daran angepasst ist, die jeweilige Pumpenbaugruppe (176, 176') zu betreiben, wobei einer der Scheitelabschnitte zwischen 0 und 360° um die Drehachse (A) der Motorwelle bezüglich des anderen Scheitelabschnitts drehbar einstellbar ist; wodurch ermöglicht wird, dass die Abgabezyklen der Pumpenbaugruppe unabhängig zeitlich abgestimmt sind.

7. Multikanal-Hydrauliksteuereinheit gemäß Anspruch 6, wobei die Scheitelabschnitte (Y, Y') der Kolbenlagerflächen (131, 131') einen Versatz von 0° haben und axial ausgerichtet sind, wodurch die Pumpenbaugruppen (176, 176') gleichzeitig auslassen, wodurch Schwingungen der Pumpenbaugruppe minimiert werden.

8. Multikanal-Hydrauliksteuereinheit gemäß Anspruch 6, wobei die Scheitelabschnitte (Y, Y') der Kolbenlagerflächen (131, 131') einen Versatz von 90° haben, wodurch die Pumpenbaugruppen (176, 176') abwechselnd auslassen, wodurch ein vom Motor eingezogener Strom minimiert wird.

9. Multikanal-Hydrauliksteuereinheit gemäß Anspruch 3, wobei eine der Hin- und Herbewegungsachsen (Y, Y') der Pumpenbaugruppen (176, 176') um 0 bis 360° von der anderen versetzt ist.

10. Multikanal-Hydrauliksteuereinheit gemäß Anspruch 1, wobei die Hydraulikblöcke (150, 150') im Wesentlichen identisch sind.

11. Multikanal-Hydrauliksteuereinheit gemäß Anspruch 10, wobei die Steuerbereiche (200, 200') im Wesentlichen identisch sind.

12. Multikanal-Hydrauliksteuereinheit gemäß Anspruch 1, wobei einer der Hydraulikblöcke (150, 150') einen Außendurchmesser von weniger als 57,15 mm (2,25 Zoll) aufweist.

## Revendications

1. Unité de commande hydraulique multi-voies pour un véhicule à moteur, l'unité de commande hydraulique comprenant :
un boîtier de moteur (115) définissant une cavité essentiellement cylindrique, ledit boîtier de moteur incluant une première extrémité de boîtier (117) et une seconde extrémité de boîtier (117'),
un moteur (101) disposé à l'intérieur du boîtier de moteur, ledit moteur incluant un arbre de sortie (110) s'étendant le long d'un axe de rotation (A), ledit arbre de sortie incluant une première extrémité d'arbre de sortie (112) et une seconde extrémité d'arbre de sortie opposée (112'),
une première plaque basculante (30) fixée sur ladite première extrémité d'arbre de sortie et une seconde plaque basculante (130') fixée sur ladite seconde extrémité d'arbre de sortie, ladite première et ladite seconde plaque basculante incluant respectivement une première (131) et une seconde (131') surface d'appui de piston,
un premier bloc hydraulique (150) accouplé à ladite première extrémité de boîtier et un second bloc hydraulique (150') accouplé à ladite seconde extrémité de boîtier, chaque bloc hydraulique incluant :
une entrée (155) pour une communication fluidique avec une source de fluide de frein et une sortie (180) pour une communication fluidique avec un frein d'un système de freinage,
une cavité de pompe (175) recevant un groupe de pompage (176) et ayant une ouverture disposée sur une première extrémité, et
une première (160) et une seconde (165) cavité de vanne recevant une première (161) et une seconde (166) vanne de régulation de fluide, chacune desdites cavités de vanne ayant une ouverture disposée sur une seconde extrémité opposée à ladite première extrémité, et
une première section de régulation (200) accouplée audit premier bloc hydraulique et une seconde section de régulation (200') accouplée audit second bloc hydraulique (200'), chaque section de régulation fournissant une première (205) et une seconde (210) bobine de solénoïde recevant respectivement des parties de ladite première et de ladite seconde vanne de régulation de fluide à une extrémité proximale.

2. Unité de commande hydraulique multi-voies suivant la revendication 1, dans laquelle ladite première section de régulation (200), ledit premier bloc hydraulique (150), ledit boîtier de moteur (115), ledit second bloc hydraulique (150') et ladite seconde section de régulation (200') sont disposés en série le long dudit axe de rotation (A) dudit arbre de sortie de moteur (110) dans l'ordre décrit selon une configuration linéaire allongée.

3. Unité de commande hydraulique multi-voies suivant la revendication 1, dans laquelle ledit groupe de pompage (176) dudit premier bloc hydraulique (150) et ledit groupe de pompage (176') dudit second bloc hydraulique (150') sont entraînés, de façon à exécuter un mouvement alternatif, par lesdites surfaces d'appui de piston rotatives respectives (131, 131'), le long d'axes de mouvement alternatif (B) respectifs disposés radialement par rapport, et sinon parallèlement, audit axe de rotation (A) dudit arbre de sortie de moteur (110), modulant, ainsi, la pression de fluide à ladite sortie (180) durant un événement de freinage.

4. Unité de commande hydraulique multi-voies suivant la revendication 3, dans laquelle ledit axe de mouvement alternatif (B) du groupe de pompage dudit premier bloc hydraulique (150) et ledit axe de mouvement alternatif dudit groupe de pompage dudit second bloc hydraulique (150') sont alignés de façon coaxiale.

5. Unité de commande hydraulique multi-voies suivant la revendication 4, dans laquelle au moins une desdites surfaces d'appui de piston (131) desdites plaques basculantes (131) est disposée de manière à former un angle oblique avec ledit axe de rotation (A).

6. Unité de commande hydraulique multi-voies suivant la revendication 4, dans laquelle chacune desdites surfaces d'appui de piston (131, 131') inclut une partie formant un sommet (Y, Y') adaptée à actionner ledit groupe de pompage respectif (176, 176'), une desdites parties formant un sommet pouvant être ajustée de façon rotative entre 0 et 360 degrés autour dudit axe de rotation (A) dudit arbre de moteur par rapport à l'autre partie formant un sommet, permettant ainsi, de programmer indépendamment les cycles de sortie desdits groupes de pompage.

7. Unité de commande hydraulique multi-voies suivant la revendication 6, dans laquelle lesdites parties formant un sommet (Y, Y') desdites surfaces d'appui de piston (131, 131') sont décalées de 0 degrés et alignées axialement, moyennant quoi les groupes de pompage (176, 176') refoulent simultanément, minimisant, ainsi, la vibration du groupe de pompage.

8. Unité de commande hydraulique multi-voies suivant la revendication 6, dans laquelle lesdites parties formant un sommet (Y, Y') desdites surfaces d'appui de piston (131, 131') sont décalées de 90 degrés, moyennant quoi les groupes de pompages (176, 176') refoulent alternativement, minimisant, ainsi, l'appel de courant dudit moteur.

9. Unité de commande hydraulique multi-voies suivant la revendication 3, dans laquelle un desdits axes de mouvement alternatif (Y, Y') des groupes de pompage (176, 176') est décalé de 0 à 360 degrés par rapport à l'autre.

10. Unité de commande hydraulique multi-voies suivant la revendication 1, dans laquelle lesdits blocs hydrauliques (150, 150') sont substantiellement identiques.

11. Unité de commande hydraulique multi-voies suivant la revendication 10, dans laquelle les sections de régulation (200, 200') sont substantiellement identiques.

12. Unité de commande hydraulique multi-voies suivant la revendication 1, dans laquelle un desdits blocs hydrauliques (150, 150') inclut un diamètre extérieur inférieur à 57,15 mm (2,25 pouces).
